# EUROPEAN PATENT APPLICATION

(11) **EP 4 571 451 A1**
(43) Date of publication of application: **18.06.2025**
(21) Application number: 24214539.9
(22) Date of filing: 21.11.2024
(51) Int. Cl.: G05F 1/67

(54) **POWER CONVERTER, METHOD FOR CONTROLLING POWER CONVERTER, AND POWER SUPPLY SYSTEM**

(30) Priority: 06.12.2023 CN 202311686659
(71) Applicant: Huawei Digital Power Technologies Co., Ltd., Shenzhen, Guangdong 518043 (CN)
(72) Inventor: ZHANG, Meiqing, Shenzhen, Guangdong, 518043 (CN); ZHAO, Mingquan, Shenzhen, Guangdong, 518043 (CN); DONG, Mingxuan, Shenzhen, Guangdong, 518043 (CN); XIN, Kai, Shenzhen, Guangdong, 518043 (CN)
(74) Representative: Maiwald GmbH

(57) **Abstract**

This application provides a power converter, a method for controlling a power converter, and a power supply system. The power converter is configured to: convert a direct current from a photovoltaic module into an alternating current and transmit the alternating current to a load. The power converter includes a direct current conversion circuit, an inverter circuit, and a controller. An input of the direct current conversion circuit is configured to connect to the photovoltaic module, and an output of the direct current conversion circuit is connected to a bus capacitor of the inverter circuit. The controller is configured to adjust a duty cycle of a switch transistor in the direct current conversion circuit, to change output power of the photovoltaic module. When power of the load is less than a specified threshold, the power converter is controlled to reduce the output power of the photovoltaic module from operating power to zero for at least once, where the operating power is greater than zero and less than rated output power, and when the output power of the photovoltaic module is the operating power, the power converter operates in a maximum power point tracking MPPT mode. According to this application, a maximum power value output by the photovoltaic module can be accurately estimated when the power converter is not connected to a load.

## Description

### TECHNICAL FIELD

This application relates to the field of power electronics, and in particular, to a power converter, a method for controlling a power converter, and a power supply system.

### BACKGROUND

As a small power supply system that can basically implement internal power balance, a microgrid generally includes a distributed power generation apparatus, an energy storage apparatus, a monitoring apparatus, a protection apparatus, an automation apparatus, and the like. When the energy storage apparatus in the system is completely discharged, a microgrid system needs to estimate a maximum photovoltaic power point in advance, namely, maximum load power that can be implemented by a current light intensity system, to implement scenarios such as black start of a power grid to independently carry a load or charge the energy storage. The microgrid system reports the estimated maximum photovoltaic power point to an upper-layer scheduling system, to prevent the microgrid system from frequently shutting down and powering off when an input load is greater than the maximum photovoltaic power point and photovoltaic power supply cannot run independently. Therefore, how to accurately estimate the maximum photovoltaic power before the black start of the power grid on the premise that the system does not depend on an external power grid or a load to provide reliable support for system scheduling is one of urgent technical problems that need to be resolved currently.

### SUMMARY

Embodiments of this application provide a power converter, a method for controlling a power converter, and a power supply system, to accurately estimate a maximum power value output by a photovoltaic module when the power converter is not connected to a load, and avoid a case in which load power input into the system is greater than a maximum photovoltaic power point.

According to a first aspect, this application provides a power converter. The power converter is configured to: convert a direct current from a photovoltaic module into an alternating current and transmit the alternating current to a load. The power converter includes a direct current conversion circuit, an inverter circuit, and a controller. An input of the direct current conversion circuit is configured to connect to the photovoltaic module, an output of the direct current conversion circuit is connected to a bus capacitor of the inverter circuit, and the bus capacitor is configured to store electric energy from the photovoltaic module. The controller is configured to: when power of the load is less than a specified threshold, control the power converter to reduce the output power of the photovoltaic module from operating power to zero for at least once, where the operating power is greater than zero and less than rated output power of the photovoltaic module, and when the output power of the photovoltaic module is the operating power, the power converter operates in a maximum power point tracking (MPPT) mode.

In this application, when the controller adjusts the output power of the photovoltaic module to the operating power, a voltage of the bus capacitor in the power converter continuously increases. However, because the power converter is not connected to any load, the power converter cannot output power to consume electric energy on the bus capacitor. To avoid damage to the bus capacitor caused by an excessively high voltage of the bus capacitor in a voltage adjustment process, after adjusting the output power of the photovoltaic module to the operating power for at least once, the controller controls the output power of the photovoltaic module to be zero, so that the voltage of the bus capacitor decreases to protect the bus capacitor, thereby further improving operating safety of the power converter.

In a possible implementation, the controller is configured to: control the power converter to reduce the output power of the photovoltaic module from the operating power to zero; and then control the power converter to operate in the MPPT mode again, to adjust the output power of the photovoltaic module to the operating power. Each time after adjusting the output power of the photovoltaic module to the operating power, the controller controls the output power of the photovoltaic module to be zero, so that the voltage of the bus capacitor decreases to protect the bus capacitor.

In a possible implementation, the controller is configured to: when a voltage of the bus capacitor is greater than an upper voltage threshold, reduce the output power of the photovoltaic module from the operating power to zero. The controller is configured to: when the output power of the photovoltaic module is zero and the voltage of the bus capacitor is not greater than a safe voltage threshold, control the power converter to operate in the MPPT mode again, to adjust the output power of the photovoltaic module to the operating power, where the upper voltage threshold is greater than the safe voltage threshold. In response to that the voltage of the bus capacitor is greater than the upper voltage threshold, the controller may control the output power of the photovoltaic module to be zero, to avoid damage to the bus capacitor caused by the excessively high voltage of the bus capacitor in the voltage adjustment process, thereby further improving operating safety of the power converter. When the voltage of the bus capacitor is restored to be below the safe voltage threshold, the output power of the photovoltaic module is adjusted to track the maximum power value of the photovoltaic module. Because the safe voltage threshold is less than the upper voltage threshold, the voltage of the bus capacitor can be prevented from frequently exceeding the upper voltage threshold in the voltage adjustment process.

In a possible implementation, the controller is configured to: after the output power of the photovoltaic module is zero and remains for a specified time interval, control the power converter to operate in the MPPT mode again, to adjust the output power of the photovoltaic module to the operating power. The controller may adjust the output power of the photovoltaic module to track the maximum power value of the photovoltaic module after the output power of the photovoltaic module is zero and remains for the specified time interval, so that the voltage of the bus capacitor can be prevented from frequently exceeding the upper voltage threshold in the voltage adjustment process.

In a possible implementation, the controller is configured to control the switch transistor of the direct current conversion circuit to remain off, so that an output current of the direct current conversion circuit is zero, to control the output power of the photovoltaic module to be zero. Herein, because the current output by the direct current conversion circuit to the inverter circuit is zero, electric energy on the bus capacitor is gradually consumed based on a loss such as an action of the switch transistor in the inverter circuit, and the voltage of the bus capacitor gradually decreases, to avoid damage to the bus capacitor caused by the excessively high voltage of the bus capacitor in the voltage adjustment process.

In a possible implementation, the power converter includes M direct current conversion circuits, and the controller is configured to adjust, in a same time period, output power of photovoltaic modules connected to N direct current conversion circuits in the power converter to the operating power, where N is a positive integer less than M. Herein, the controller may sequentially control, based on a specified time sequence, the output power of the photovoltaic module connected to each direct current conversion circuit to be the operating power, to avoid impact of an excessively high power injection value on the direct current bus capacitor in a process of tracking the maximum power value of the photovoltaic module, and reduce a voltage climbing rate of a direct current bus, thereby further improving operating safety of the power converter.

In a possible implementation, the inverter circuit includes a plurality of switch transistors, and the controller is configured to: when the voltage of the bus capacitor is greater than the upper voltage threshold, control the switch transistor in the inverter circuit to be turned on and off, to reduce the voltage of the bus capacitor.

In a possible implementation, the controller is further configured to: when the voltage of the bus capacitor is greater than the upper voltage threshold, increase a switching frequency of the switch transistor in the inverter circuit, to accelerate a voltage decrease speed of the bus capacitor.

In a possible implementation, a connection point between the output of the direct current conversion circuit and the bus capacitor is configured to connect to an energy storage apparatus, and when the voltage of the bus capacitor is greater than the upper voltage threshold, the bus capacitor is configured to charge the energy storage apparatus, to accelerate a voltage decrease speed of the bus capacitor.

According to a second aspect, this application provides a method for controlling a power converter. The method includes adjusting a duty cycle of a switch transistor in a direct current conversion circuit of the power converter, to change output power of a photovoltaic module; and when power of a load is less than a specified threshold, controlling the power converter to reduce the output power of the photovoltaic module from operating power to zero for at least once, where the operating power is greater than zero and less than rated output power of the photovoltaic module, and when the output power of the photovoltaic module is the operating power, the power converter operates in a MPPT mode.

In this application, when the output power of the photovoltaic module is adjusted to the operating power, a voltage of the bus capacitor in the power converter continuously increases. However, because the power converter is not connected to any load, the power converter cannot output power to consume electric energy on the bus capacitor. To avoid damage to the bus capacitor caused by an excessively high voltage of the bus capacitor in a voltage adjustment process, after the output power of the photovoltaic module is adjusted to the operating power for at least once, the output power of the photovoltaic module is controlled to be zero, so that the voltage of the bus capacitor decreases to protect the bus capacitor, thereby further improving operating safety of the power converter.

In a possible implementation, the method includes: controlling the power converter to reduce the output power of the photovoltaic module from the operating power to zero; and then controlling the power converter to operate in the MPPT mode again, to adjust the output power of the photovoltaic module to the operating power. Herein, after the output power of the photovoltaic module is adjusted to the operating power each time, the output power of the photovoltaic module is controlled to be zero, so that the voltage of the bus capacitor decreases to protect the bus capacitor.

In a possible implementation, the method includes: when a voltage of the bus capacitor is greater than an upper voltage threshold, reducing the output power of the photovoltaic module from the operating power to zero; and when the output power of the photovoltaic module is zero and the voltage of the bus capacitor is not greater than a safe voltage threshold, controlling the power converter to operate in the MPPT mode again, to adjust the output power of the photovoltaic module to the operating power, where the upper voltage threshold is greater than the safe voltage threshold. In response to that the voltage of the bus capacitor is greater than the upper voltage threshold, the output power of the photovoltaic module is controlled to be zero, to avoid damage to the bus capacitor caused by the excessively high voltage of the bus capacitor in the voltage adjustment process, thereby further improving operating safety of the power converter. When the voltage of the bus capacitor is restored to be below the safe voltage threshold, the output power of the photovoltaic module is adjusted to track the maximum power value of the photovoltaic module. Because the safe voltage threshold is less than the upper voltage threshold, the voltage of the bus capacitor can be prevented from frequently exceeding the upper voltage threshold in the voltage adjustment process.

In a possible implementation, the method includes: after the output power of the photovoltaic module is zero and remains for a specified time interval, controlling the power converter to operate in the MPPT mode again, to adjust the output power of the photovoltaic module to the operating power. When the voltage of the bus capacitor is restored to be below the safe voltage threshold, the output power of the photovoltaic module is adjusted to track the maximum power value of the photovoltaic module. Because the safe voltage threshold is less than the upper voltage threshold, the voltage of the bus capacitor can be prevented from frequently exceeding the upper voltage threshold in the voltage adjustment process.

According to a third aspect, this application provides a power supply system. The power supply system includes the power converter in any one of the first aspect and the possible implementations of the first aspect and a photovoltaic module. An input of a direct current conversion circuit in any power converter is connected to one or more photovoltaic modules, an output of the direct current conversion circuit in each power converter is connected to a bus capacitor of an inverter circuit, outputs of inverter circuits in power converters are connected in parallel and then connected to a load, and a bus capacitor is configured to store electric energy from the photovoltaic module.

In a possible implementation, a controller in the power converter is configured to: in response to that a voltage of the bus capacitor is greater than an upper voltage threshold, control output reactive power of the inverter circuit to increase, so that reactive cross current between the power converters increases, to accelerate a voltage decrease speed of the bus capacitor.

In a possible implementation, the power supply system includes a power station controller. The power station controller is configured to: receive maximum power point data from the power converter, and adjust a quantity of loads connected to the power converter, so that total power of the loads connected to the power converter is not greater than a maximum power point.

### BRIEF DESCRIPTION OF DRAWINGS

FIG. 1 is a diagram of an application scenario of a power supply system according to this application;
FIG. 2 is a schematic of a structure of a power supply system according to this application;
FIG. 3 is a schematic of a waveform of voltage control at an input of a direct current conversion circuit according to this application;
FIG. 4 is a schematic of another waveform of voltage control at an input of a direct current conversion circuit according to this application;
FIG. 5 is a schematic of another waveform of voltage control at an input of a direct current conversion circuit according to this application;
FIG. 6 is a schematic of another waveform of voltage control at an input of a direct current conversion circuit according to this application;
FIG. 7 is a schematic of another waveform of voltage control at an input of a direct current conversion circuit according to this application;
FIG. 8 is a schematic of a structure of a direct current conversion circuit according to this application;
FIG. 9 is a schematic of another structure of a power supply system according to this application;
FIG. 10 is a schematic of a power control waveform under a plurality of photovoltaic inputs according to this application;
FIG. 11 is a schematic of a structure of an inverter circuit according to this application;
FIG. 12 is a schematic of another structure of an inverter circuit according to this application; and
FIG. 13 is a schematic of another structure of an inverter circuit according to this application.

### DESCRIPTION OF EMBODIMENTS

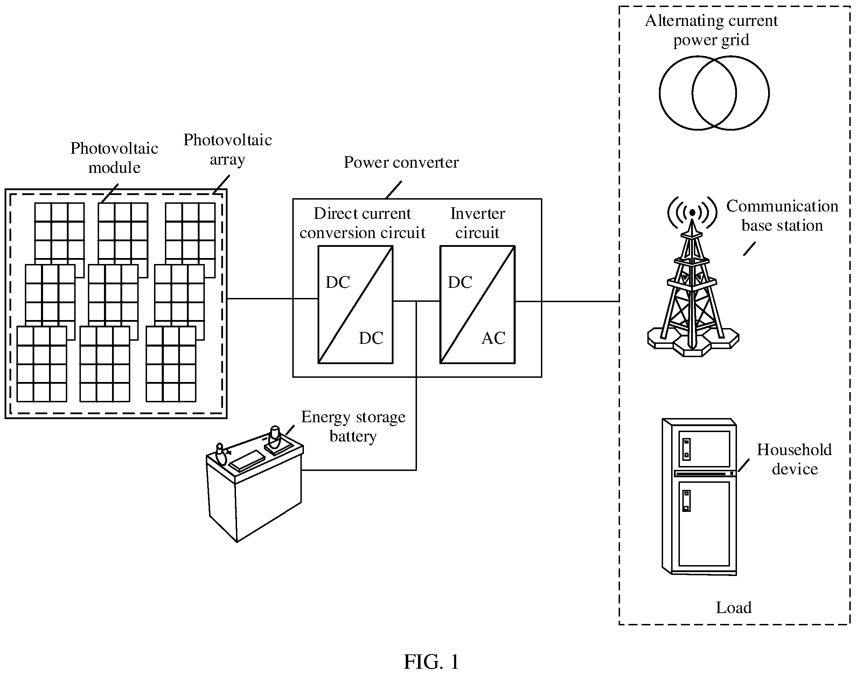

FIG. 1 is a diagram of an application scenario of a power supply system according to this application. The power supply system provided in this application may include a direct current power supply and a power converter. The direct current power supply may be a photovoltaic array. The photovoltaic array includes a plurality of photovoltaic modules connected in series or in parallel. An output of the photovoltaic module may be connected to an input of the power converter. Herein, the power converter may include a direct current conversion circuit and an inverter circuit. An input of the direct current conversion circuit may be connected to the photovoltaic module, an output of the direct current conversion circuit may be connected to an input of the inverter circuit, and an output of the inverter circuit is configured to connect to a load. The power converter may perform, by using the direct current conversion circuit, voltage transformation on a direct current provided by the photovoltaic array, and perform, by using the inverter circuit, inversion conversion on a direct current on which voltage transformation is performed, to output an alternating current obtained after inversion conversion to the load for power supply. The load may be an alternating current power grid or an alternating current electrical device. Herein, when the power converter is grid-connected, the load may be an alternating current power grid. When the power converter is off-the-grid, the load may be an alternating current electrical device such as a communication base station or a household device.

In some feasible implementations, with reference to FIG. 1 again, the direct current power supply may further include an energy storage battery, an output of the energy storage battery may be connected to the output of the direct current conversion circuit in the power converter, the energy storage battery may provide a direct current for the inverter circuit, the inverter circuit performs inversion conversion on the direct current provided by the energy storage battery, and outputs an alternating current obtained after inversion conversion to the load for power supply.

In some feasible implementations, after the direct current conversion circuit in the power converter performs voltage transformation on the direct current provided by the photovoltaic array in FIG. 1, the energy storage battery is charged based on the direct current output by the power converter.

In the application scenario shown in FIG. 1, before the power converter is connected to the load, or when power of the energy storage battery in the power supply system is exhausted, the power supply system needs to estimate a maximum photovoltaic power point in advance to implement scenarios such as black start to independently carry a load or charge the energy storage. The black start means that after the entire system is shut down due to a fault, the system does not depend on the help of another network. A unit that has an automatic startup capability in the system is started to drive a unit that does not have the automatic startup capability, to gradually expand a recovery scope of the system, thereby finally recovering the entire system. The maximum photovoltaic power point is maximum load power that can be achieved by the photovoltaic array under current light intensity. If the maximum power of the photovoltaic module is not accurately estimated, when load power input into the system is greater than the maximum photovoltaic power point, a photovoltaic power supply process may not run normally, and the power supply system is frequently shut down and powered off, affecting operating reliability of the power supply system.

In the power supply system provided in this application, the inverter circuit in the power converter may include a bus capacitor, a positive output and a negative output of the direct current conversion circuit in the power converter may be respectively connected to two ends of the bus capacitor, and the inverter circuit performs inversion conversion based on a direct current input by the bus capacitor. The power converter may include a controller. Before the power converter is connected to the load, or when the power converter performs black start by using the controller, a maximum power value output by the photovoltaic module in the power supply system needs to be detected and estimated by using the controller when the power converter is not connected to the load. When power of the load connected to the power converter is less than a specified threshold, the controller controls the power converter to reduce the output power of the photovoltaic module from operating power to zero for at least once, where the operating power is greater than zero and less than rated output power of the photovoltaic module, and when the output power of the photovoltaic module is the operating power, the power converter operates in a MPPT mode. Specifically, the controller controls a voltage output by the photovoltaic module to the input of the direct current conversion circuit to be an open-circuit voltage. Herein, the open-circuit voltage is a maximum voltage output by the photovoltaic module when the photovoltaic module connected to the direct current conversion circuit is not connected to any load, and when the output voltage of the photovoltaic module is an open-circuit voltage, the output power of the photovoltaic module is zero, that is, power of the input of the direct current conversion circuit is zero. The controller obtains a voltage at two ends of the bus capacitor, and when a voltage of the bus capacitor is less than a safe voltage threshold, adjusts the output power of the photovoltaic module to the operating power. In other words, the controller controls the voltage at the input of the direct current conversion circuit to be adjusted from the open-circuit voltage to the operating voltage, and when the voltage at the input of the direct current conversion circuit is the operating voltage, the power converter operates in the MPPT mode. For example, when the power converter operates in the MPPT mode, the controller controls the voltage at the input of the direct current conversion circuit to be adjusted from the open-circuit voltage to a first voltage. The controller may obtain first power at the input of the direct current conversion circuit when the voltage at the input of the direct current conversion circuit is the first voltage, and after obtaining the first power corresponding to the first voltage, control the output current of the direct current conversion circuit to be zero, so that the voltage at the input of the direct current conversion circuit is restored to the open-circuit voltage, to reduce the output power of the photovoltaic module from the operating power to zero. Further, when the voltage of the bus capacitor is restored to be below the safe voltage threshold, the controller may determine a second voltage based on the first voltage and a specified step, and after controlling the voltage at the input of the direct current conversion circuit to be adjusted from the open-circuit voltage to the second voltage, obtain second power of the input at the direct current conversion circuit when the voltage at the input of the direct current conversion circuit is the second voltage. When an absolute value of a difference between the first power and the second power is less than a specified threshold, the controller may determine the larger power value in the first power and the second power as the maximum power value output by the photovoltaic module. Herein, the controller adjusts the voltage at the input of the direct current conversion circuit for a plurality of times, to obtain power at the input of the direct current conversion circuit under different voltages. The controller may determine a subsequent voltage adjustment direction and adjustment amplitude in response to changes of the power at the input of the direct current conversion circuit under different voltages, and when determining that the change amplitude of the power at the input of the direct current conversion circuit tends to be stable, the controller determines that the current power at the input of the direct current conversion circuit is near the maximum value, to accurately estimate the maximum power value output by the photovoltaic module. In addition, when the voltage at the input of the direct current conversion circuit is adjusted from the open-circuit voltage to any operating voltage less than the open-circuit voltage, the voltage of the bus capacitor in the power converter continuously increases. However, because the power converter is not connected to any load, the power converter cannot output power to consume electric energy on the bus capacitor. To avoid damage to the bus capacitor caused by an excessively high voltage of the bus capacitor in a voltage adjustment process, each time after adjusting the voltage at the input of the direct current conversion circuit to any operating voltage less than the open-circuit voltage, the controller controls the output current of the direct current conversion circuit to be zero, so that the voltage of the bus capacitor decreases to protect the bus capacitor, thereby further improving operating safety of the power converter.

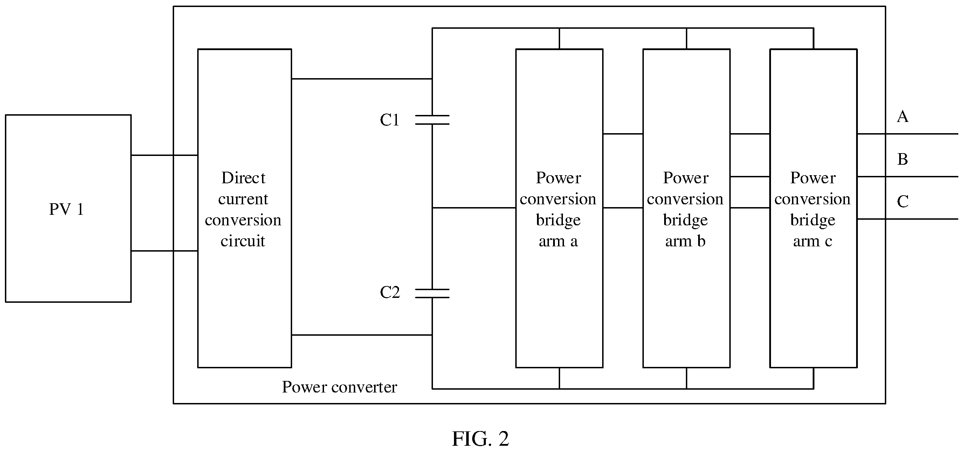

FIG. 2 is a schematic of a structure of a power supply system according to this application. The power supply system shown in FIG. 2 includes a power converter and a photovoltaic module PV 1. The power converter includes a direct current conversion circuit and an inverter circuit. An input of the direct current conversion circuit may be connected to the photovoltaic module PV 1. The inverter circuit may include a first bus capacitor and a second bus capacitor (which may be respectively represented as a capacitor C1 and a capacitor C2 for ease of description) that are connected in series and three bridge arms. An output of the direct current conversion circuit may be connected to two ends of the capacitor C1 and the capacitor C2 that are connected in series, and the three bridge arms may include a power conversion bridge arm a, a power conversion bridge arm b, and a power conversion bridge arm c. The power conversion bridge arm a, the power conversion bridge arm b, and the power conversion bridge arm c may respectively lead out ports corresponding to three-phase outputs of the power converters A, B, and C, each bridge arm is connected in parallel to two ends of the capacitor C1 and the capacitor C2 that are connected in series, and one end of any bridge arm is connected to a connection end between the capacitor C1 and the capacitor C2. In the power supply system shown in FIG. 2, the photovoltaic module is configured to provide a direct current input for the power converter. The power converter may perform, by using the direct current conversion circuit, voltage transformation on a direct current provided by the photovoltaic array, and perform, by using the inverter circuit, inversion conversion on a direct current on which voltage transformation is performed, to output an alternating current obtained after inversion conversion to the load for power supply. The load may be an alternating current power grid or an alternating current electrical device.

In some feasible implementations, in the power supply system shown in FIG. 2, the power converter may include a controller. Before the power converter is connected to the load, or when the power converter performs black start by using the controller, a maximum power value output by the photovoltaic module in the power supply system needs to be detected and estimated by using the controller when the power converter is not connected to the load. The controller controls a voltage output by the photovoltaic module PV 1 to the direct current conversion circuit to be an open-circuit voltage. The controller may obtain a voltage at two ends of the capacitor C1 and the capacitor C2, and when the voltage of the capacitor C1 and the capacitor C2 is less than a safe voltage threshold, control the voltage at the input of the direct current conversion circuit to be adjusted from the open-circuit voltage to the first voltage. The controller may obtain first power at the input of the direct current conversion circuit when the voltage at the input of the direct current conversion circuit is the first voltage, and after obtaining the first power corresponding to the first voltage, control the output current of the direct current conversion circuit to be zero, so that the voltage at the input of the direct current conversion circuit is restored to the open-circuit voltage. Further, when the voltage of the capacitor C1 and the capacitor C2 is restored to be below the safe voltage threshold, the controller may determine a second voltage based on the first voltage and a specified step, and after controlling the voltage at the input of the direct current conversion circuit to be adjusted from the open-circuit voltage to the second voltage, obtain second power of the input at the direct current conversion circuit when the voltage at the input of the direct current conversion circuit is the second voltage. When an absolute value of a difference between the first power and the second power is less than a specified threshold, the controller may determine the larger power value in the first power and the second power as the maximum power value output by the photovoltaic module. Herein, the controller adjusts the voltage at the input of the direct current conversion circuit for a plurality of times, to obtain power at the input of the direct current conversion circuit under different voltages. The controller may determine a subsequent voltage adjustment direction and adjustment amplitude in response to changes of the power at the input of the direct current conversion circuit under different voltages, and when determining that the change amplitude of the power at the input of the direct current conversion circuit tends to be stable, the controller determines that the current power at the input of the direct current conversion circuit is near the maximum value, to accurately estimate the maximum power value output by the photovoltaic module. In addition, when the voltage at the input of the direct current conversion circuit is adjusted from the open-circuit voltage to any operating voltage less than the open-circuit voltage, the voltage of the capacitor C1 and the capacitor C2 in the power converter continuously increases. However, because the power converter is not connected to any load, the power converter cannot output power to consume electric energy on the capacitor C1 and the capacitor C2. To avoid damage to the capacitor C1 and the capacitor C2 caused by an excessively high voltage of the capacitor C1 and the capacitor C2 in a voltage adjustment process, the controller controls the output current of the direct current conversion circuit to be zero each time after adjusting the voltage at the input of the direct current conversion circuit to any operating voltage less than the open-circuit voltage, so that the voltage of the capacitor C1 and the capacitor C2 decrease, thereby further improving operating safety of the power converter.

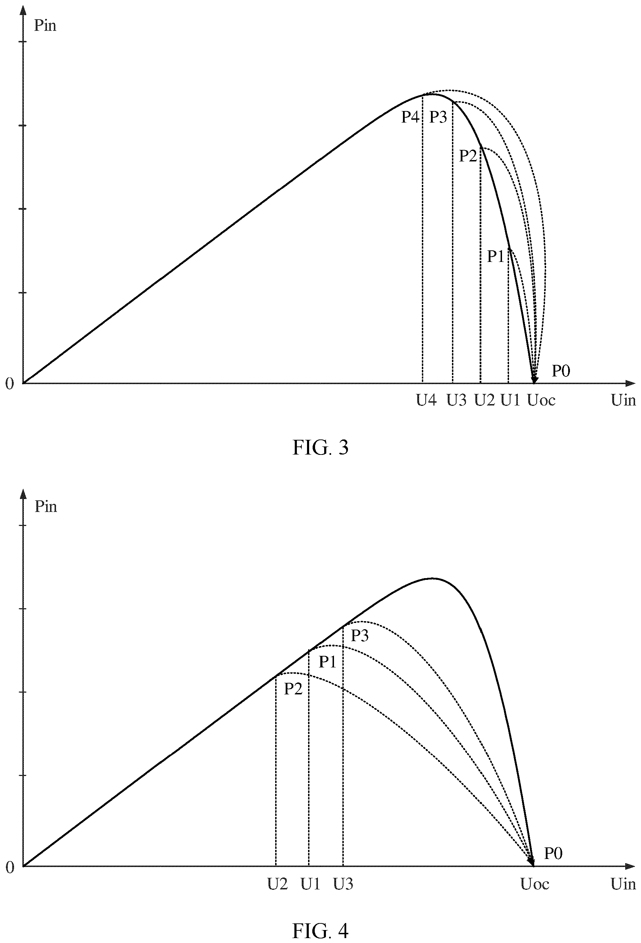

The following describes, by using examples with reference to FIG. 3 to FIG. 12, the power converter provided in this embodiment of this application. In some feasible implementations, the controller controls the power converter to reduce the output power of the photovoltaic module from the operating power to zero, and then controls the power converter to operate in the MPPT mode again, to adjust the output power of the photovoltaic module to the operating power. Specifically, the controller controls the voltage output by the photovoltaic module to the input of the direct current conversion circuit to be the open-circuit voltage, and when the voltage of the bus capacitor is less than the safe voltage threshold, controls the voltage at the input of the direct current conversion circuit to be adjusted from the open-circuit voltage to the first voltage. The controller may obtain the first power at the input of the direct current conversion circuit when the voltage at the input of the direct current conversion circuit is the first voltage, and after obtaining the first power corresponding to the first voltage, control the output current of the direct current conversion circuit to be zero, so that the voltage at the input of the direct current conversion circuit is restored to the open-circuit voltage. When the voltage of the bus capacitor is restored to be below the safe voltage threshold, the controller may determine the second voltage based on the first voltage and a first specified step, and after controlling the voltage at the input of the direct current conversion circuit to be adjusted from the open-circuit voltage to the second voltage, obtain the second power of the input at the direct current conversion circuit when the voltage at the input of the direct current conversion circuit is the second voltage. When the absolute value of a difference between the first power and the second power is less than the specified threshold, the controller may determine the larger power value in the first power and the second power as the maximum power value output by the photovoltaic module. Specifically, before the controller controls the voltage at the input of the direct current conversion circuit to be adjusted from the open-circuit voltage to the first voltage, the first voltage may be obtained by the controller by adjusting a third voltage by a second specified step in a first direction, where the first direction may be increasing or decreasing the input voltage of the direct current conversion circuit. In a process in which the controller controls the voltage at the input of the direct current conversion circuit to be adjusted from the first voltage to the second voltage, a magnitude of the second voltage may be determined based on a power change at the input of the direct current conversion circuit in a process in which the voltage at the input of the direct current conversion circuit is controlled to be adjusted from the third voltage to the first voltage, so as to continuously increase the power at the input of the direct current conversion circuit. The controller may determine an adjustment direction from the first voltage to the second voltage based on a difference between the third power and the first power and a difference between the third voltage and the first voltage. To be specific, adjustment is performed still in the first direction corresponding to the third voltage to the first voltage, or adjustment is performed in a second direction opposite to the first direction. The third power is third power at the input of the direct current conversion circuit when the voltage at the input of the direct current conversion circuit is the third voltage. Specifically, when a ratio of the difference between the third power and the first power to the difference between the third voltage and the first voltage is positive, the controller adjusts the first voltage by the first specified step in the first direction to obtain the second voltage, and when the ratio of the difference between the third power and the first power to the difference between the third voltage and the first voltage is negative, the controller adjusts the first voltage by the first specified step in the second direction to obtain the second voltage. In other words, the controller may continue to adjust the voltage at the input of the direct current conversion circuit in the first direction in response to that the voltage at the input of the direct current conversion circuit increases or decreases in the first direction and the power at the input of the direct current conversion circuit increases. In response to that the voltage at the input of the direct current conversion circuit increases or decreases based on the first direction and the power at the input of the direct current conversion circuit decreases, the controller adjusts the voltage at the input of the direct current conversion circuit in the second direction opposite to the first direction, until a change amplitude of the power at the input of the direct current conversion circuit is less than a specified threshold. Herein, the controller adjusts the voltage at the input of the direct current conversion circuit for a plurality of times, to obtain power at the input of the direct current conversion circuit under different voltages. The controller may determine a subsequent voltage adjustment direction and adjustment amplitude in response to changes of the power at the input of the direct current conversion circuit under different voltages, and when determining that the change amplitude of the power at the input of the direct current conversion circuit tends to be stable, the controller determines that the current power at the input of the direct current conversion circuit is near the maximum value, to accurately estimate the maximum power value output by the photovoltaic module.

FIG. 3 is a schematic of a waveform of voltage control at an input of a direct current conversion circuit according to this application. As shown in FIG. 3, the controller controls a voltage Uin output by the photovoltaic module to the input of the direct current conversion circuit to be an open-circuit voltage Uoc, and when the voltage at the input of the direct current conversion circuit is the open-circuit voltage, the output power of the photovoltaic module is zero, and power Pin at the input of the direct current conversion circuit is power P0, where a value of the power P0 is zero. When the voltage of the bus capacitor in the inverter circuit is less than the safe voltage threshold, the controller may control the voltage Uin at the input of the direct current conversion circuit to decrease from the open-circuit voltage by the specified step to U1, and obtain that when a value of Uin is U1, the power Pin at the input of the direct current conversion circuit increases to P1. When the power Pin at the input of the direct current conversion circuit is P1, the voltage of the bus capacitor in the inverter circuit increases, and the controller controls the output current of the direct current conversion circuit to be zero, so that the voltage Uin at the input of the direct current conversion circuit is restored to the open-circuit voltage Uoc, and Pin at the input of the direct current conversion circuit also decreases to zero. When the voltage of the bus capacitor is restored to be below the safe voltage threshold, the controller may determine U2 based on U1 and the specified step. Because the ratio of the difference between the power P1 and the power P0 to the difference between the open-circuit voltage Uoc and U1 is positive, to be specific, the current voltage adjustment direction (decreasing the voltage) helps increase the power at the input of the direct current conversion circuit, the controller controls the value of Uin to be U2, where U2 is equal to U1 minus the specified step, and obtains that when the value of Uin is U2, the value of Pin at the input of the direct current conversion circuit is P2. If the absolute value of the difference between P1 and P2 is greater than the specified threshold, the controller determines that neither P1 nor P2 is the maximum power value output by the photovoltaic module. When the power Pin at the input of the direct current conversion circuit is P2, the voltage of the bus capacitor in the inverter circuit increases, and the controller may control, once again, the output current of the direct current conversion circuit to be zero, so that the voltage Uin at the input of the direct current conversion circuit is restored to the open-circuit voltage Uoc, and Pin at the input of the direct current conversion circuit also decreases to zero. Similarly, when the voltage of the bus capacitor is restored to be below the safe voltage threshold, the controller may determine U3 based on U2 and the specified step, and determine U4 based on U3 and the specified step. A voltage adjustment process is similar to the process from U1 to U2, and details are not described herein again. When the value of Uin is U3, the absolute value of the difference between P4 and P3 of Pin at the input of the direct current conversion circuit is less than the specified threshold, to be specific, when the power change amplitude at the input of the direct current conversion circuit tends to be stable, the controller determines that the current power at the input of the direct current conversion circuit is near the maximum value. In this case, the controller may determine that P4, which is larger in P3 and P4, is the maximum power value output by the photovoltaic module. The controller adjusts the voltage at the input of the direct current conversion circuit for a plurality of times, to obtain power at the input of the direct current conversion circuit under different voltages. The controller may determine a subsequent voltage adjustment direction and adjustment amplitude in response to changes of the power at the input of the direct current conversion circuit under different voltages, and when determining that the change amplitude of the power at the input of the direct current conversion circuit tends to be stable, the controller determines that the current power at the input of the direct current conversion circuit is near the maximum value, to accurately estimate the maximum power value output by the photovoltaic module. In addition, to avoid damage to the bus capacitor caused by an excessively high voltage of the bus capacitor in the voltage adjustment process, each time after adjusting the voltage at the input of the direct current conversion circuit to any operating voltage less than the open-circuit voltage, the controller controls the output current of the direct current conversion circuit to be zero, so that the voltage of the bus capacitor decreases to protect the bus capacitor, thereby further improving operating safety of the power converter.

FIG. 4 is a schematic of another waveform of voltage control at an input of a direct current conversion circuit according to this application. As shown in FIG. 4, the controller controls the voltage Uin output by the photovoltaic module to the input of the direct current conversion circuit to be the open-circuit voltage Uoc, and when the voltage at the input of the direct current conversion circuit is the open-circuit voltage, the output power of the photovoltaic module is zero, and the power Pin at the input of the direct current conversion circuit is P0, where a value of P0 is zero. When the voltage of the bus capacitor in the inverter circuit is less than the safe voltage threshold, the controller may control the voltage Uin at the input of the direct current conversion circuit to decrease from the open-circuit voltage by the specified step to U1, and obtain that when a value of Uin is U1, the power Pin at the input of the direct current conversion circuit is P1. When the power Pin at the input of the direct current conversion circuit is P1, the voltage of the bus capacitor in the inverter circuit increases, and the controller controls the output current of the direct current conversion circuit to be zero, so that the voltage Uin at the input of the direct current conversion circuit is restored to the open-circuit voltage Uoc, and Pin at the input of the direct current conversion circuit also decreases to zero. When the voltage of the bus capacitor is restored to be below the safe voltage threshold, the controller may determine U2 based on U1 and the specified step. Because the ratio of the difference between P1 and P0 to the difference between the open-circuit voltage Uoc and U1 is positive, to be specific, the current voltage adjustment direction (decreasing the voltage) helps increase the power at the input of the direct current conversion circuit, the controller controls the value of Uin to be U2, where U2 is equal to U1 minus the specified step, and obtains that when the value of Uin is U2, the power Pin at the input of the direct current conversion circuit is P2. If the absolute value of the difference between P1 and P2 is greater than the specified threshold, the controller determines that neither P1 nor P2 is the maximum power value output by the photovoltaic module. When the power Pin at the input of the direct current conversion circuit is P2, the voltage of the bus capacitor in the inverter circuit increases, and the controller may control, once again, the output current of the direct current conversion circuit to be zero, so that the voltage Uin at the input of the direct current conversion circuit is restored to the open-circuit voltage Uoc, and Pin at the input of the direct current conversion circuit also decreases to zero. When the voltage of the bus capacitor is restored to be below the safe voltage threshold, the controller may determine U3 based on U2 and the specified step. Because the ratio of the difference between P2 and P1 to the difference between U2 and U1 is negative, to be specific, the current voltage adjustment direction (decreasing the voltage) prevents the power at the input of the direct current conversion circuit from increasing, the controller controls, in an adjustment direction opposite to a direction from U1 to U2, Uin to increase from U2 by a specified step to U1, and controls the output current of the direct current conversion circuit to be zero, so that the voltage Uin at the input of the direct current conversion circuit is restored to the open-circuit voltage Uoc, and Pin at the input of the direct current conversion circuit also decreases to zero. Because the ratio of the difference between P1 and P2 to the difference between U1 and U2 is positive, to be specific, the current voltage adjustment direction (increasing the voltage) helps increase the power at the input of the direct current conversion circuit, when the voltage of the bus capacitor is restored to be below the safe voltage threshold, the controller may control the value of Uin to be U3, where U3 is equal to U1 plus the specified step, and obtain that when the value of Uin is U3, the power Pin at the input of the direct current conversion circuit is P3. If the absolute value of the difference between P2 and P3 is greater than the specified threshold, the controller determines that neither P2 nor P3 is the maximum power value output by the photovoltaic module. Similarly, the controller continues to adjust Uin based on U3 and the specified step, until a change amplitude of the power Pin at the input of the direct current conversion circuit is less than the specified threshold, and determines that the current power Pin at the input of the direct current conversion circuit is near the maximum value, to accurately estimate the maximum power value output by the photovoltaic module.

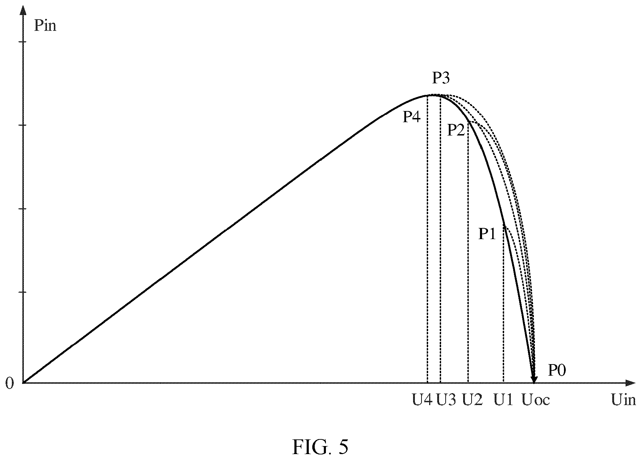

In some feasible implementations, before controlling the voltage at the input of the direct current conversion circuit to be adjusted from the open-circuit voltage to the third voltage, the controller further obtains fourth power at the input of the direct current conversion circuit when the voltage at the input of the direct current conversion circuit is a fourth voltage after controlling the voltage at the input of the direct current conversion circuit to be adjusted from the open-circuit voltage to the fourth voltage, and controls the voltage at the input of the direct current conversion circuit to be the open-circuit voltage, where the third voltage may be obtained by the controller by increasing or decreasing the fourth voltage by a third specified step. When the absolute value of the difference between the first power and the third power is greater than the absolute value of the difference between the third power and the fourth power, the controller may control the first specified step to be greater than the second specified step, and when the absolute value of the difference between the first power and the third power is less than the absolute value of the difference between the third power and the fourth power, the controller controls the first specified step to be less than the second specified step. FIG. 5 is a schematic of another waveform of voltage control at an input of a direct current conversion circuit according to this application. As shown in FIG. 5, the controller controls a voltage Uin output by the photovoltaic module to the input of the direct current conversion circuit to be an open-circuit voltage Uoc, and when the voltage at the input of the direct current conversion circuit is the open-circuit voltage, the output power of the photovoltaic module is zero, and power Pin at the input of the direct current conversion circuit is power P0, where power P0 is zero. When the voltage of the bus capacitor in the inverter circuit is less than the safe voltage threshold, the controller may control the voltage Uin at the input of the direct current conversion circuit to decrease from the open-circuit voltage by the specified step to U1, and obtain that when a value of Uin is U1, the power Pin at the input of the direct current conversion circuit increases to P1. When the power Pin at the input of the direct current conversion circuit is P1, the voltage of the bus capacitor in the inverter circuit increases, and the controller controls the output current of the direct current conversion circuit to be zero, so that the voltage Uin at the input of the direct current conversion circuit is restored to the open-circuit voltage Uoc, and Pin at the input of the direct current conversion circuit also decreases to zero. When the voltage of the bus capacitor is restored to be below the safe voltage threshold, the controller may determine U2 based on U1 and the specified step. Because the ratio of the difference between the power P1 and the power P0 to the difference between the open-circuit voltage Uoc and U1 is positive, to be specific, the current voltage adjustment direction (decreasing the voltage) helps increase the power at the input of the direct current conversion circuit, the controller controls the value of Uin to be U2, where U2 is equal to U1 minus the specified step, and obtains that when the value of Uin is U2, the value of Pin at the input of the direct current conversion circuit is P2. Herein, the specified step of the voltage Uin at the input of the direct current conversion circuit from Uoc to U1 may be different from the specified step of the voltage Uin from U1 to U2. When the power Pin at the input of the direct current conversion circuit is P2, the voltage of the bus capacitor in the inverter circuit increases, and the controller may control, once again, the output current of the direct current conversion circuit to be zero, so that the voltage Uin at the input of the direct current conversion circuit is restored to the open-circuit voltage Uoc, and Pin at the input of the direct current conversion circuit also decreases to zero. Similarly, when the voltage of the bus capacitor is restored to be below the safe voltage threshold, the controller may determine U3 based on U2 and the specified step, where U3 may be equal to U2 minus the specified step. Optionally, when the absolute value of the difference between P2 and P1 is greater than the absolute value of the difference between P1 and P0, the controller controls the specified step from U2 to U3 to be greater than the specified step from U1 to U2. When the absolute value of the difference between P2 and P1 is less than the absolute value of the difference between P1 and P0, the specified step from U2 to U3 is controlled to be less than the specified step from U1 to U2. If the absolute value of the difference between P2 and P1 in FIG. 5 is less than the absolute value of the difference between P1 and P0, the controller controls the specified step from U2 to U3 to be less than the specified step from U1 to U2, that is, the absolute value of the difference between U3 and U2 is less than the absolute value of the difference between U2 and U1. Similarly, when the voltage of the bus capacitor is restored to be below the safe voltage threshold, the controller may determine U4 based on U3 and the specified step, where U4 may be equal to U3 minus the specified step. Because the absolute value of the difference between P3 and P2 is less than the absolute value of the difference between P2 and P1, the controller controls the specified step from U3 to U4 to be further less than the specified step from U2 to U3, that is, the absolute value of the difference between U4 and U3 is less than the absolute value of the difference between U3 and U2. The controller adjusts the voltage at the input of the direct current conversion circuit for a plurality of times, to obtain the power at the input of the direct current conversion circuit under different voltages. The controller may determine the subsequent voltage adjustment direction and adjustment amplitude in response to changes of the power at the input of the direct current conversion circuit under different voltages, and reduce the adjustment amplitude of the voltage at the input of the direct current conversion circuit each time when the change amplitude of the power at the input of the direct current conversion circuit decreases, so that the power at the input of the direct current conversion circuit further approaches to the maximum value, and the estimated maximum power value output by the photovoltaic module is more accurate.

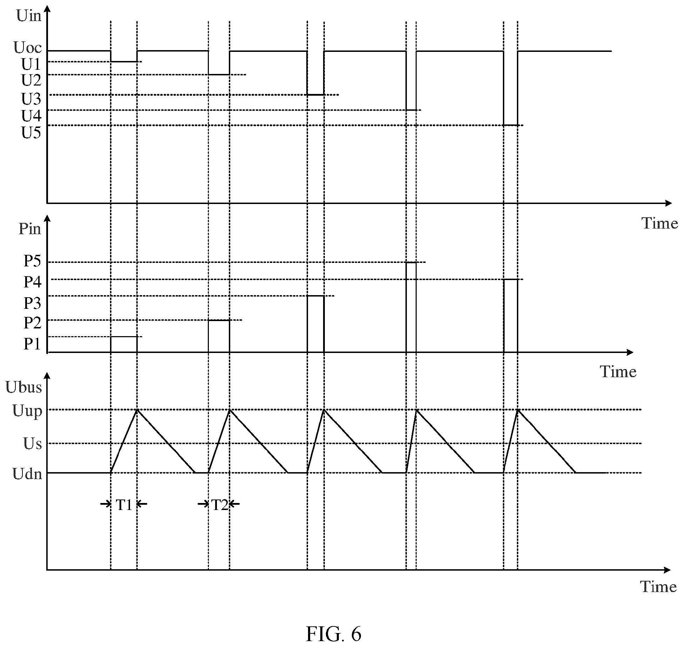

In some feasible implementations, when the voltage of the bus capacitor is greater than an upper voltage threshold, the controller may reduce the output power of the photovoltaic module from the operating power to zero, and when the output power of the photovoltaic module is zero and the voltage of the bus capacitor is not greater than the safe voltage threshold, control the power converter to operate in the MPPT mode again, to adjust the output power of the photovoltaic module to the operating power, where the upper voltage threshold is greater than the safe voltage threshold. Specifically, after the voltage at the input of the direct current conversion circuit is adjusted from the open-circuit voltage to the operating voltage less than the open-circuit voltage, the controller may control the output current of the direct current conversion circuit to be zero in response to that the voltage of the bus capacitor in the inverter circuit is greater than the upper voltage threshold, where the upper voltage threshold is greater than the safe voltage threshold herein. Also with reference to FIG. 6, FIG. 6 is a schematic of another waveform of voltage control at an input of a direct current conversion circuit according to this application. As shown in FIG. 6, when the voltage Uin at the input of the direct current conversion circuit is equal to the open-circuit voltage Uoc, the output power of the photovoltaic module is zero, the power Pin at the input of the direct current conversion circuit is the power P0, and the value of the power P0 is zero. When a voltage Ubus of the bus capacitor in the inverter circuit is less than a safe voltage threshold Us (which may be equal to a voltage Udn), the controller may control the voltage Uin at the input of the direct current conversion circuit to decrease from the open-circuit voltage Uoc by the specified step to U1, and when the value of Uin is U1, the power Pin at the input of the direct current conversion circuit correspondingly increases to P1. When the power Pin at the input of the direct current conversion circuit is P1, the voltage Ubus of the bus capacitor in the inverter circuit increases. When the controller adjusts the value of Uin to U2 and the voltage Ubus of the bus capacitor increases and is greater than an upper voltage threshold Uup after a time interval T2, the controller may control the output current of the direct current conversion circuit to be zero in response to that the voltage Ubus of the bus capacitor is greater than the upper voltage threshold Uup, so that the voltage Uin at the input of the direct current conversion circuit is restored to the open-circuit voltage Uoc, and the power Pin at the input of the direct current conversion circuit also decreases to zero. Because the current output by the direct current conversion circuit to the inverter circuit is zero, electric energy on the bus capacitor is gradually consumed based on an action loss of a switch transistor in the inverter circuit, and the voltage Ubus of the bus capacitor gradually decreases and is less than the safe voltage threshold Us. Further, in response to that the voltage Ubus of the bus capacitor is less than the safe voltage threshold Us and the voltage Ubus of the bus capacitor is not less than a lower voltage threshold Udn (which may be equal to the lower voltage threshold Udn), the controller may control the voltage Uin at the input of the direct current conversion circuit to decrease from the open-circuit voltage Uoc by the specified step to U2. U2 may be obtained by the controller based on U1 and the specified step. For a determining process, refer to the descriptions in FIG. 3 or FIG. 4. Details are not described herein again. When the value of Uin is U2, the power Pin at the input of the direct current conversion circuit correspondingly increases to P2. When the power Pin at the input of the direct current conversion circuit is P2, the voltage Ubus of the bus capacitor in the inverter circuit increases. When the controller adjusts the value of Uin to U1 and the voltage Ubus of the bus capacitor increases and is greater than an upper voltage threshold Uup after a time interval T1, the controller may control the output current of the direct current conversion circuit to be zero in response to that the voltage Ubus of the bus capacitor is greater than the upper voltage threshold Uup, so that the voltage Uin at the input of the direct current conversion circuit is restored to the open-circuit voltage Uoc, and the power Pin at the input of the direct current conversion circuit also decreases to zero. Because the current output by the direct current conversion circuit to the inverter circuit is zero, electric energy on the bus capacitor is gradually consumed based on an action loss of a switch transistor in the inverter circuit, and the voltage Ubus of the bus capacitor gradually decreases and is less than the safe voltage threshold Us. Similarly, the controller may separately control the voltage Uin at the input of the direct current conversion circuit to be adjusted from the open-circuit voltage Uoc to U3, U4, and U5. After a specific time interval, the voltage Ubus of the bus capacitor increases and is greater than the upper voltage threshold Uup. In response to that the voltage Ubus of the bus capacitor is greater than the upper voltage threshold Uup, the controller may control the output current of the direct current conversion circuit to be zero, so that the voltage Uin at the input of the direct current conversion circuit is restored to the open-circuit voltage Uoc, to avoid damage to the bus capacitor caused by an excessively high voltage of the bus capacitor in the voltage adjustment process, thereby further improving operating safety of the power converter.

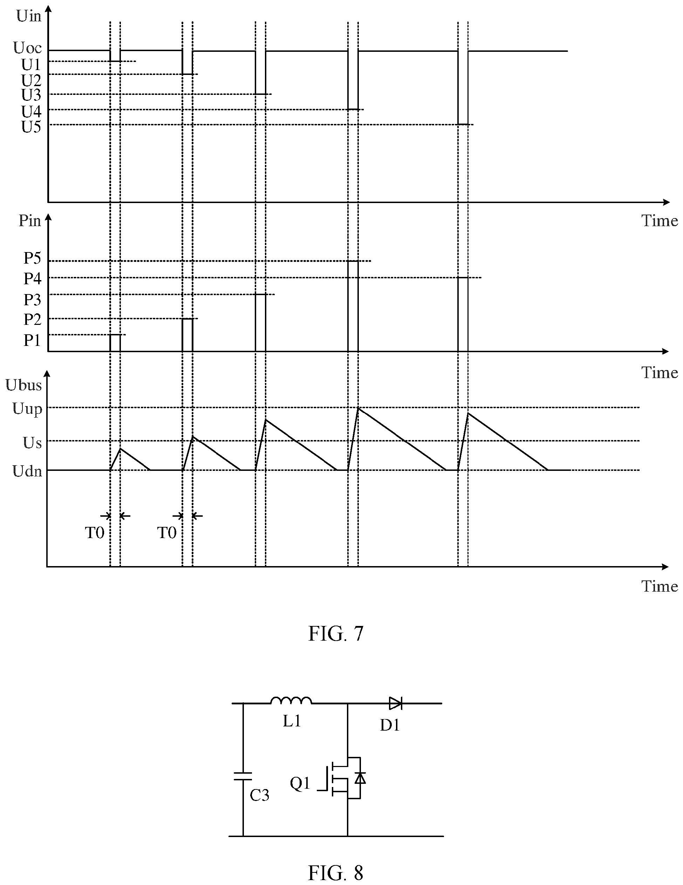

In some feasible implementations, after the output power of the photovoltaic module is zero and remains for a specified time interval, the controller controls the power converter to operate in the MPPT mode again, to adjust the output power of the photovoltaic module to the operating power. Specifically, after controlling the voltage at the input of the direct current conversion circuit to be adjusted from the open-circuit voltage to the operating voltage less than the open-circuit voltage and maintaining the voltage for the specified time interval, the controller controls the output current of the direct current conversion circuit to be zero until the voltage of the bus capacitor is less than the safe voltage threshold. Also with reference to FIG. 7, FIG. 7 is a schematic of another waveform of voltage control at an input of a direct current conversion circuit according to this application. As shown in FIG. 7, when the voltage Uin at the input of the direct current conversion circuit is equal to the open-circuit voltage Uoc, the output power of the photovoltaic module is zero, the power Pin at the input of the direct current conversion circuit is the power P0, and the value of the power P0 is zero. When a voltage Ubus of the bus capacitor in the inverter circuit is less than a safe voltage threshold Us (which may be equal to a voltage Udn), the controller may control the voltage Uin at the input of the direct current conversion circuit to decrease from the open-circuit voltage Uoc by the specified step to U1, and when the value of Uin is U1, the power Pin at the input of the direct current conversion circuit correspondingly increases to P1. When the power Pin at the input of the direct current conversion circuit is P1, the voltage Ubus of the bus capacitor in the inverter circuit increases. After the controller adjusts the value of Uin to U1 and a preset time interval T0 elapses, the voltage Ubus of the bus capacitor gradually increases, and the controller may control the output current of the direct current conversion circuit to be zero in response to that the value of Uin is U1 and the preset time interval T0 elapses, so that the voltage Uin at the input of the direct current conversion circuit is restored to the open-circuit voltage Uoc, and the power Pin at the input of the direct current conversion circuit also decreases to zero. Because the current output by the direct current conversion circuit to the inverter circuit is zero, electric energy on the bus capacitor is gradually consumed based on an action loss of a switch transistor in the inverter circuit, and the voltage Ubus of the bus capacitor gradually decreases and is less than the safe voltage threshold Us. Further, in response to that the voltage Ubus of the bus capacitor is less than the safe voltage threshold Us and the voltage Ubus of the bus capacitor is not less than the lower voltage threshold Udn (which may be equal to the lower voltage threshold Udn), the controller may control the voltage Uin at the input of the direct current conversion circuit to decrease from the open-circuit voltage Uoc by the specified step to U2. U2 may be obtained by the controller based on U1 and the specified step. For the determining process, refer to the descriptions in FIG. 3 or FIG. 4. Details are not described herein again. When the value of Uin is U2, the power Pin at the input of the direct current conversion circuit correspondingly increases to P2. When the power Pin at the input of the direct current conversion circuit is P2, the voltage Ubus of the bus capacitor in the inverter circuit increases. After the controller adjusts the value of Uin to U2 and the preset time interval T0 elapses, the voltage Ubus of the bus capacitor gradually increases, and the controller may control the output current of the direct current conversion circuit to be zero in response to that the value of Uin is U2 and the preset time interval T0 elapses, so that the voltage Uin at the input of the direct current conversion circuit is restored to the open-circuit voltage Uoc, and the power Pin at the input of the direct current conversion circuit also decreases to zero. Because the current output by the direct current conversion circuit to the inverter circuit is zero, electric energy on the bus capacitor is gradually consumed based on an action loss of a switch transistor in the inverter circuit, and the voltage Ubus of the bus capacitor gradually decreases and is less than the safe voltage threshold Us. Similarly, the controller may separately control the voltage Uin at the input of the direct current conversion circuit to be adjusted from the open-circuit voltage Uoc to U3, U4, and U5, and then the voltage Ubus of the bus capacitor increases. In response to that the value of Uin is adjusted to a specified value and the preset time interval T0 elapses, the controller may control the output current of the direct current conversion circuit to be zero, so that the voltage Uin at the input of the direct current conversion circuit is restored to the open-circuit voltage Uoc. This avoids damage to the bus capacitor caused by an excessively high voltage of the bus capacitor in the voltage adjustment process, and ensures that stable power at the input of the direct current conversion circuit can be obtained after each voltage adjustment, to further improve operating safety of the power converter.

In some feasible implementations, the direct current conversion circuit may include a switch transistor, an inductor, and a diode. The switch transistor may be connected in series to the diode, and the switch transistor and the diode that are connected in series may be configured to connect in parallel to the two ends of the bus capacitor in the inverter circuit. One end of the inductor may be connected to a connection end between the switch transistor and the diode, and the other end of the inductor may be configured to connect to the photovoltaic module. Also with reference to FIG. 8, FIG. 8 is a schematic of a structure of a direct current conversion circuit according to this application. The direct current conversion circuit shown in FIG. 8 may include a switch transistor Q1, an inductor L 1, and a diode D1. A first end of the switch transistor Q1 may be connected to one end of the diode D1, and a second end of the switch transistor Q1 and the other end of the diode D1 are respectively configured to connect to the two ends of the bus capacitor in the inverter circuit. The first end of the switch transistor Q1 may be further connected to one end of the inductor L1, the second end of the switch transistor Q1 and the other end of the inductor L1 are respectively configured to connect to two ends of the capacitor C3, and the capacitor C3 may be configured to connect to the output of the photovoltaic module. Herein, after controlling the voltage at the input of the direct current conversion circuit to be adjusted from the open-circuit voltage to the operating voltage less than the open-circuit voltage, in response to that the voltage of the bus capacitor in the inverter circuit is greater than the upper voltage threshold, the controller may control the switch transistor Q1 to remain off, so that the output current of the direct current conversion circuit is zero. Alternatively, after controlling the voltage at the input of the direct current conversion circuit to be adjusted from the open-circuit voltage to the operating voltage less than the open-circuit voltage and maintaining the voltage for the specified time interval, the controller controls the switch transistor Q1 to remain off, so that the output current of the direct current conversion circuit is zero. Because the current output by the direct current conversion circuit to the inverter circuit is zero, electric energy on the bus capacitor is gradually consumed based on a loss such as an action of the switch transistor in the inverter circuit, and the voltage of the bus capacitor gradually decreases, to avoid damage to the bus capacitor caused by the excessively high voltage of the bus capacitor in the voltage adjustment process. The switch transistor in the direct current conversion circuit may be a metal-oxide-semiconductor field-effect transistor (MOSFET), which is referred to as a MOS transistor for short. A first end of the switch transistor may be a drain, and a second end may be a source. The switch transistor may alternatively be an insulated gate bipolar transistor (IGBT), and the first end of the switch transistor may be a collector, and a second end may be an emitter. In other words, the first end and the second end of the switch transistor may be determined based on a specific component type. This is not limited herein.

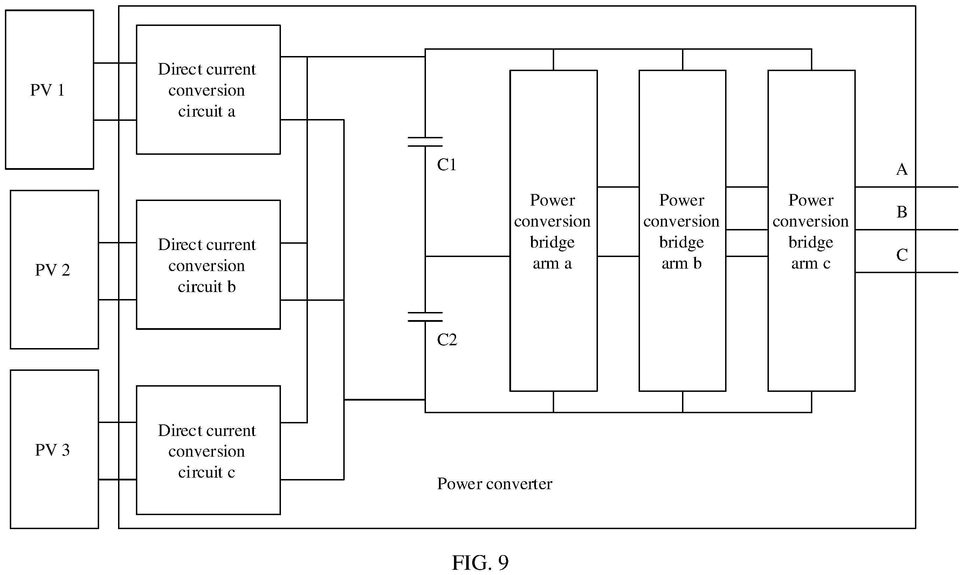

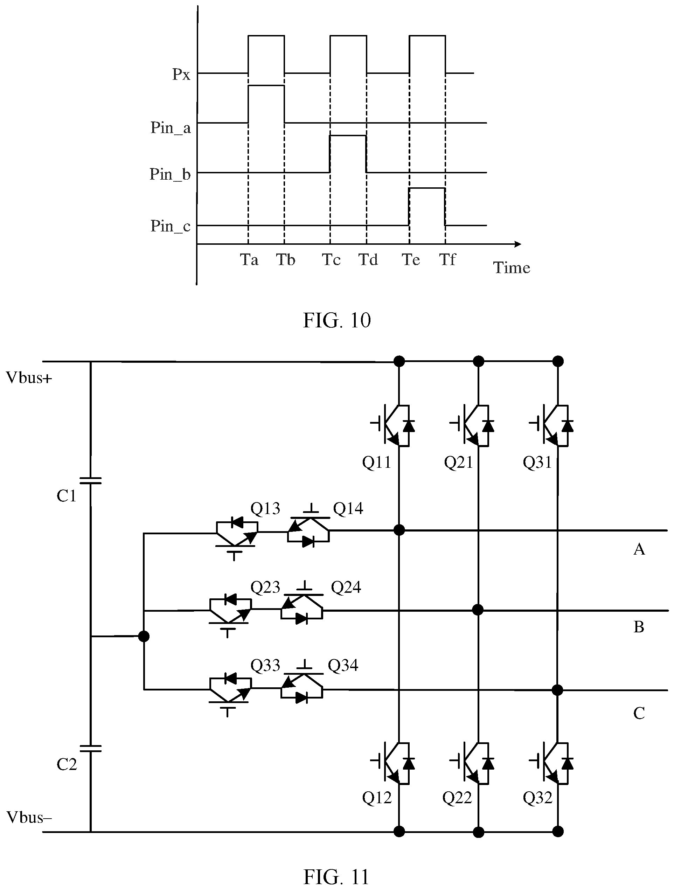

In some feasible implementations, the power converter may include at least two direct current conversion circuits, and outputs of the direct current conversion circuits are connected in parallel and then connected to the input of the inverter circuit. For example, the power converter includes M direct current conversion circuits, and the controller is configured to adjust, in a same time period, output power of photovoltaic modules connected to N direct current conversion circuits in the power converter to the operating power, where N is a positive integer less than M. Specifically, when the voltage of the bus capacitor is less than the safe voltage threshold, the controller in the power converter may control the voltage at the input of each direct current conversion circuit to be adjusted from the open-circuit voltage to the operating voltage less than the open-circuit voltage, and a quantity of direct current conversion circuits simultaneously adjusted by the controller is less than a quantity of direct current conversion circuits in the power converter. FIG. 9 is a schematic of another structure of a power supply system according to this application. The power supply system shown in FIG. 9 includes a power converter and a photovoltaic module. The power converter includes a plurality of direct current conversion circuits and an inverter circuit. For example, the power converter includes three direct current conversion circuits (a direct current conversion circuit a, a direct current conversion circuit b, and a direct current conversion circuit c). Inputs of the direct current conversion circuit a, the direct current conversion circuit b, and the direct current conversion circuit c may be respectively connected to a photovoltaic module PV 1, a photovoltaic module PV 2, and a photovoltaic module PV 3. The inverter circuit may include a first bus capacitor and a second bus capacitor (which may be respectively represented as a capacitor C1 and a capacitor C2 for ease of description) that are connected in series and three bridge arms. Outputs of the direct current conversion circuit a, the direct current conversion circuit b, and the direct current conversion circuit c may be connected, after being connected in parallel, to two ends of the capacitor C1 and the capacitor C2 that are connected in series, and the three bridge arms may include a power conversion bridge arm a, a power conversion bridge arm b, and a power conversion bridge arm c. The power conversion bridge arm a, the power conversion bridge arm b, and the power conversion bridge arm c may respectively lead out ports corresponding to three-phase outputs of the power converters A, B, and C, each bridge arm is connected in parallel to two ends of the capacitor C1 and the capacitor C2 that are connected in series, and one end of any bridge arm is connected to a connection end between the capacitor C1 and the capacitor C2. When voltages of the capacitor C1 and the capacitor C2 are less than a safe voltage threshold, a controller (not shown in FIG. 9) in the power converter may sequentially control, based on a specified time sequence, the input voltages of the direct current conversion circuits to be adjusted from the open-circuit voltage to the operating voltage less than the open-circuit voltage, in other words, the controller adjusts a voltage at an input of one direct current conversion circuit at a same time interval. Also with reference to FIG. 10, FIG. 10 is a schematic of a power control waveform under a plurality of photovoltaic inputs according to this application. When the voltage of the bus capacitor is less than the safe voltage threshold, the controller may control, at an interval between a moment Ta and a moment Tb, the voltage at the input of the direct current conversion circuit a to decrease from the open-circuit voltage to a specified voltage value (for a process of setting the adjusted voltage value, refer to the descriptions in FIG. 3 or FIG. 4, and details are not described herein again). When the voltage at the input of the direct current conversion circuit a is a specified voltage value, power Pin_a at the input of the direct current conversion circuit a also increases to a stable value. In this case, a sum Px of input power of the power converter is a power value of Pin a. The controller controls the output current of the direct current conversion circuit a to be zero, so that the voltage at the input of the direct current conversion circuit a is restored to the open-circuit voltage, and the power Pin_a at the input of the direct current conversion circuit also decreases to zero. When the voltage of the bus capacitor is less than the safe voltage threshold, the controller may control, at an interval between a moment Tc and a moment Td, the voltage at the input of the direct current conversion circuit b to decrease from the open-circuit voltage to a specified voltage value (for a process of setting the adjusted voltage value, refer to the descriptions in FIG. 3 or FIG. 4, and details are not described herein again). When the voltage at the input of the direct current conversion circuit b is a specified voltage value, power Pin b at the input of the direct current conversion circuit b also increases to a stable value. In this case, a sum Px of input power of the power converter is a power value of Pin b. The controller controls the output current of the direct current conversion circuit b to be zero, so that the voltage at the input of the direct current conversion circuit b is restored to the open-circuit voltage, and the power Pin_b at the input of the direct current conversion circuit also decreases to zero. When the voltage of the bus capacitor is less than the safe voltage threshold, the controller may control, at an interval between a moment Te and a moment Tf, the voltage at the input of the direct current conversion circuit c to decrease from the open-circuit voltage to a specified voltage value (for a process of setting the adjusted voltage value, refer to the descriptions in FIG. 3 or FIG. 4, and details are not described herein again). When the voltage at the input of the direct current conversion circuit c is a specified voltage value, power Pin_c at the input of the direct current conversion circuit c also increases to a stable value. In this case, a sum Px of input power of the power converter is a power value of Pin_c. The controller controls the output current of the direct current conversion circuit c to be zero, so that the voltage at the input of the direct current conversion circuit c is restored to the open-circuit voltage, and the power Pin_c at the input of the direct current conversion circuit also decreases to zero. It may be understood that, a quantity of direct current conversion circuits that are simultaneously adjusted may alternatively be greater than one and less than a quantity of direct current conversion circuits in the power converter, and a sequence of adjusting the voltages at the inputs of the direct current conversion circuits may alternatively be another sequence, which may be specifically determined based on a requirement of an actual application scenario, and is not limited herein. The controller sequentially controls, based on the specified time sequence, the voltage at the input of each direct current conversion circuit to be adjusted from the open-circuit voltage to the operating voltage less than the open-circuit voltage, so that impact of an excessively high power injection value in a voltage adjustment process on the direct current bus capacitor can be avoided, and a voltage climbing rate of the direct current bus can be reduced, to avoid damage to the bus capacitor caused by an excessively high voltage of the bus capacitor in the voltage adjustment process, thereby further improving operating safety of the power converter.

In some feasible implementations, the inverter circuit in the power converter may include a plurality of bridge arms, and each bridge arm may include a first bridge arm switch transistor and a second bridge arm switch transistor that are connected in series, the two bridge arm switch transistors connected in series are connected in parallel to two ends of a positive bus capacitor and a negative bus capacitor that are connected in series. A connection end between the first bridge arm switch transistor and the second bridge arm switch transistor that are connected in series may be connected to a neutral point by using the third bridge arm switch transistor and the fourth bridge arm switch transistor that are connected in series. Specifically, also with reference to FIG. 11, FIG. 11 is a schematic of a structure of an inverter circuit according to this application. As shown in FIG. 11, the inverter circuit in FIG. 11 may include a capacitor C1, a capacitor C2, and three bridge arms (a bridge arm a, a bridge arm b, and a bridge arm c). The bridge arm a, the bridge arm b, and the bridge arm c are respectively bridge arms of three phases A, B, and C, and the bridge arm a, the bridge arm b, and the bridge arm c respectively lead out ports corresponding to the three phases A, B, and C. The bridge arm a may include a first bridge arm switch transistor and a second bridge arm switch transistor (which may be represented as a switch transistor Q11 and a switch transistor Q12 for ease of description) that are connected in series, the switch transistor Q11 and the switch transistor Q12 may be connected in parallel to two ends of the capacitor C1 and the capacitor C2 that are connected in series in the power converter, a phase-A port may be led out from a connection end between the switch transistor Q11 and the switch transistor Q12, and the connection end between the switch transistor Q11 and the switch transistor Q12 may be connected to a connection end between the capacitor C1 and the capacitor C2 by using a third bridge arm switch transistor and a fourth bridge arm switch transistor (which may be represented as a switch transistor Q13 and a switch transistor Q14 for ease of description) that are additionally connected in series. The bridge arm b may include a switch transistor Q21, a switch transistor Q22, a switch transistor Q23, and a switch transistor Q24, and the bridge arm c may include a switch transistor Q31, a switch transistor Q32, a switch transistor Q33, and a switch transistor Q34. It may be understood that, in the inverter circuit shown in FIG. 11, circuit structures of the bridge arm b and the bridge arm c are the same as those of the bridge arm a, and details are not described herein again. The switch transistors in the power converter may be MOS transistors, IGBT transistors, or the like. This is not limited herein. Herein, when the controller adjusts the voltage at the input of the direct current conversion circuit from the open-circuit voltage to the operating voltage less than the open-circuit voltage, the voltages of the capacitor C1 and the capacitor C2 gradually increase, and the controller controls the output current of the direct current conversion circuit to be zero, and controls the switch transistors in the inverter circuit to be turned on or off. Electric energy on the capacitor C1 and the capacitor C2 is gradually consumed based on an action loss of the switch transistors in the inverter circuit, so that voltages on the capacitor C1 and the capacitor C2 gradually decrease. In addition, the controller may increase a switching frequency of the switch transistor in the inverter circuit, change a modulation mode, or the like, to further accelerate electric energy consumption speeds of the capacitor C1 and the capacitor C2, so that the voltages of the capacitor C1 and the capacitor C2 decrease faster, and component safety is higher.

In some feasible implementations, the output of the power converter may be connected to an output of another power converter in parallel and then connected to a load, and the controller in each power converter controls output reactive power of the inverter circuit in the power converter to increase, so that a reactive cross current is formed between the power converters, and an electric energy loss on the bus capacitor in the inverter circuit increases, to accelerate a voltage decrease speed of the bus capacitor.

In some feasible implementations, when the input of the power converter is connected to the photovoltaic module and the energy storage battery, the controller in the power converter controls output active power of the direct current conversion circuit in the power converter to increase, so that the energy storage battery absorbs the active power from the power converter, the electric energy loss on the bus capacitor in the inverter circuit increases, to accelerate the voltage decrease speed of the bus capacitor.

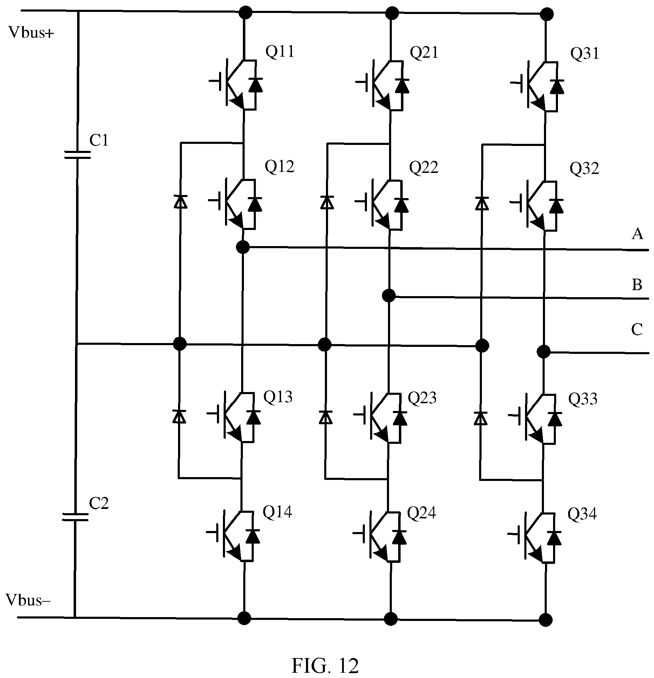

In some feasible implementations, each bridge arm in the inverter circuit may include four bridge arm switch transistors connected in series, and the four bridge arm switch transistors connected in series are connected in parallel to two ends of the positive bus capacitor and the negative bus capacitor in the power converter. In addition, a connection end between a fifth bridge arm switch transistor and a sixth bridge arm switch transistor in the four bridge arm switch transistors connected in series is connected to a connection end between a seventh bridge arm switch transistor and an eighth bridge arm switch transistor by using two diodes connected in series, and a connection end between the two diodes connected in series is connected to the connection end between the capacitor C1 and the capacitor C2. Also with reference to FIG. 12, FIG. 12 is a schematic of another structure of an inverter circuit according to this application. As shown in FIG. 12, the inverter circuit in FIG. 12 may include a capacitor C1 and a capacitor C2 that are connected in series, and three bridge arms (a bridge arm a, a bridge arm b, and a bridge arm c). The bridge arm a, the bridge arm b, and the bridge arm c are respectively bridge arms of three phases A, B, and C, and the bridge arm a, the bridge arm b, and the bridge arm c respectively lead out ports corresponding to the three phases A, B, and C. The bridge arm a may include four bridge arm switch transistors (which may be represented as a switch transistor Q11, a switch transistor Q12, a switch transistor Q13, and a switch transistor Q14 for ease of description) connected in series, the switch transistor Q11, the switch transistor Q12, the switch transistor Q13, and the switch transistor Q14 are sequentially connected in series and connected in parallel to two ends of the capacitor C1 and the capacitor C2, a connection end between the switch transistor Q11 and the switch transistor Q12 is connected to a connection end between the switch transistor Q13 and the switch transistor Q14 by using two diodes connected in series, and a connection end between the two diodes connected in series is connected to a connection end between the capacitor C1 and the capacitor C2, and a phase-A port may be led out from a connection end between the switch transistor Q12 and the switch transistor Q13. The bridge arm b may include a switch transistor Q21, a switch transistor Q22, a switch transistor Q23, a switch transistor Q24, and two diodes. The bridge arm c may include a switch transistor Q31, a switch transistor Q32, a switch transistor Q33, a switch transistor Q34, and two diodes. It may be understood that, in the inverter circuit shown in FIG. 12, circuit structures of the bridge arm b and the bridge arm c are the same as those of the bridge arm a, and details are not described herein again. Herein, when the controller adjusts the voltage at the input of the direct current conversion circuit from the open-circuit voltage to the operating voltage less than the open-circuit voltage, the voltages of the capacitor C1 and the capacitor C2 gradually increase, and the controller controls the output current of the direct current conversion circuit to be zero, and controls the switch transistors in the inverter circuit to be turned on or off. Electric energy on the capacitor C1 and the capacitor C2 is gradually consumed based on an action loss of the switch transistors in the inverter circuit, so that voltages on the capacitor C1 and the capacitor C2 gradually decrease. In addition, the controller may increase a switching frequency of the switch transistor in the inverter circuit, to further accelerate electric energy consumption speeds of the capacitor C1 and the capacitor C2, so that the voltages of the capacitor C1 and the capacitor C2 decrease faster, and component safety is higher.

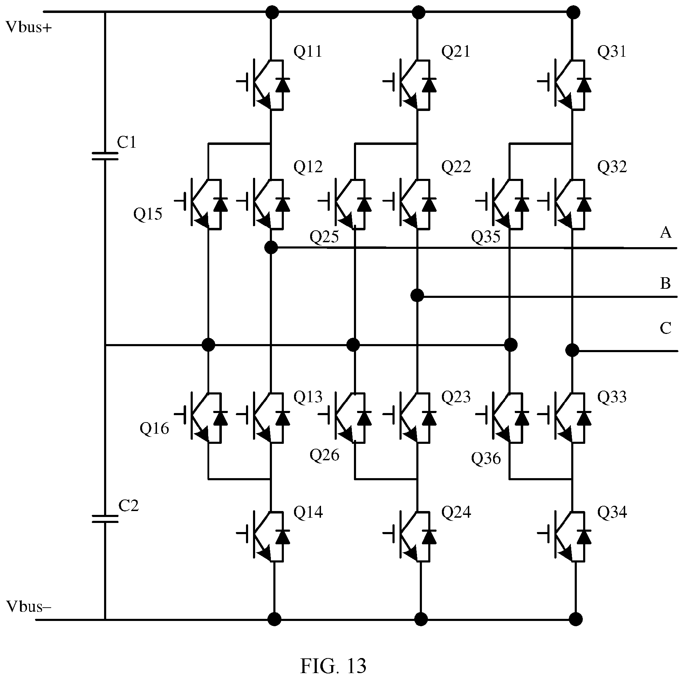

In some feasible implementations, each bridge arm in the inverter circuit may include four bridge arm switch transistors connected in series, and the four bridge arm switch transistors connected in series are connected in parallel to two ends of the positive bus capacitor and the negative bus capacitor in the power converter. In addition, a connection end between a ninth bridge arm switch transistor and a tenth bridge arm switch transistor in the four bridge arm switch transistors connected in series is connected to a connection end between an eleventh bridge arm switch transistor and a twelfth bridge arm switch transistor by using two switch transistors additionally connected in series, and a connection end between the two switch transistors connected in series is connected to the connection end between the capacitor C1 and the capacitor C2. Also with reference to FIG. 13, FIG. 13 is a schematic of another structure of an inverter circuit according to this application. As shown in FIG. 13, the inverter circuit in FIG. 13 may include a capacitor C1 and a capacitor C2 that are connected in series, and three bridge arms (a bridge arm a, a bridge arm b, and a bridge arm c). The bridge arm a, the bridge arm b, and the bridge arm c are respectively bridge arms of three phases A, B, and C, and the bridge arm a, the bridge arm b, and the bridge arm c respectively lead out ports corresponding to the three phases A, B, and C. The bridge arm a may include four bridge arm switch transistors (which may be represented as a switch transistor Q11, a switch transistor Q12, a switch transistor Q13, and a switch transistor Q14 for ease of description) connected in series, the switch transistor Q11, the switch transistor Q12, the switch transistor Q13, and the switch transistor Q14 are sequentially connected in series and connected in parallel to two ends of the capacitor C1 and the capacitor C2, a connection end between the switch transistor Q11 and the switch transistor Q12 is connected to a connection end between the switch transistor Q13 and the switch transistor Q14 by using two switch transistors connected in series (a switch transistor Q15 and a switch transistor Q16), and a connection end between the switch transistor Q15 and the switch transistor Q 16 is connected to a connection end between the capacitor C1 and the capacitor C2, and a phase-A port may be led out from a connection end between the switch transistor Q12 and the switch transistor Q13. The bridge arm b may include a switch transistor Q21, a switch transistor Q22, a switch transistor Q23, a switch transistor Q24, a switch transistor Q25, and a switch transistor Q26, and the bridge arm c may include a switch transistor Q31, a switch transistor Q32, a switch transistor Q33, a switch transistor Q34, a switch transistor Q35, and a switch transistor Q36. It may be understood that, in the inverter circuit shown in FIG. 13, circuit structures of the bridge arm b and the bridge arm c are the same as those of the bridge arm a, and details are not described herein again. Herein, when the controller adjusts the voltage at the input of the direct current conversion circuit from the open-circuit voltage to the operating voltage less than the open-circuit voltage, the voltages of the capacitor C1 and the capacitor C2 gradually increase, and the controller controls the output current of the direct current conversion circuit to be zero, and controls the switch transistors in the inverter circuit to be turned on or off. Electric energy on the capacitor C1 and the capacitor C2 is gradually consumed based on an action loss of the switch transistors in the inverter circuit, so that voltages on the capacitor C1 and the capacitor C2 gradually decrease. In addition, the controller may increase a switching frequency of the switch transistor in the inverter circuit, to further accelerate electric energy consumption speeds of the capacitor C1 and the capacitor C2, so that the voltages of the capacitor C1 and the capacitor C2 decrease faster, and component safety is higher.

## Claims

1. A power converter, wherein the power converter is configured to: convert a direct current from a photovoltaic module into an alternating current and transmit the alternating current to a load, the power converter comprises a direct current conversion circuit, an inverter circuit, and a controller, an input of the direct current conversion circuit is configured to connect to the photovoltaic module, and an output of the direct current conversion circuit is connected to a bus capacitor of the inverter circuit;
the controller is configured to adjust a duty cycle of a switch transistor in the direct current conversion circuit, to change output power of the photovoltaic module; and
the controller is further configured to: when power of the load is less than a specified threshold, control the power converter to reduce the output power of the photovoltaic module from operating power to zero for at least once, wherein the operating power is greater than zero and less than rated output power of the photovoltaic module, and when the output power of the photovoltaic module is the operating power, the power converter operates in a maximum power point tracking MPPT mode.

2. The power converter according to claim 1, wherein that the controller is configured to control the power converter to reduce the output power of the photovoltaic module from operating power to zero for at least once comprises:
the controller is configured to: control the power converter to reduce the output power of the photovoltaic module from the operating power to zero; and then control the power converter to operate in the MPPT mode again, to adjust the output power of the photovoltaic module to the operating power.

3. The power converter according to claim 1 or 2, wherein that the controller is configured to to reduce the output power of the photovoltaic module from operating power to zero for at least once comprises:
the controller is configured to: when a voltage of the bus capacitor is greater than an upper voltage threshold, reduce the output power of the photovoltaic module from the operating power to zero; and
the controller is configured to: when the output power of the photovoltaic module is zero and the voltage of the bus capacitor is not greater than a safe voltage threshold, control the power converter to operate in the MPPT mode again, to adjust the output power of the photovoltaic module to the operating power, wherein the upper voltage threshold is greater than the safe voltage threshold.

4. The power converter according to any one of claims 1 to 3, wherein the controller is configured to: after the output power of the photovoltaic module is zero and remains for a specified time interval, control the power converter to operate in the MPPT mode again, to adjust the output power of the photovoltaic module to the operating power.

5. The power converter according to any one of claims 1 to 4, wherein the controller is configured to control the switch transistor of the direct current conversion circuit to remain off, so that an output current of the direct current conversion circuit is zero, to control the output power of the photovoltaic module to be zero.

6. The power converter according to any one of claims 1 to 5, wherein the power converter comprises M direct current conversion circuits, and the controller is configured to adjust, in a same time period, output power of photovoltaic modules connected to N direct current conversion circuits in the power converter to the operating power, wherein N is a positive integer less than M.

7. The power converter according to any one of claims 3 to 6, wherein the controller is configured to: when the voltage of the bus capacitor is greater than the upper voltage threshold, control the switch transistor in the inverter circuit to be turned on and off, to reduce the voltage of the bus capacitor.

8. The power converter according to claim 7, wherein the controller is further configured to: when the voltage of the bus capacitor is greater than the upper voltage threshold, increase a switching frequency of the switch transistor in the inverter circuit.

9. The power converter according to claim 8, wherein a connection point between the output of the direct current conversion circuit and the bus capacitor is configured to connect to an energy storage apparatus, and when the voltage of the bus capacitor is greater than the upper voltage threshold, the bus capacitor is configured to charge the energy storage apparatus.

10. A method for controlling a power converter, wherein the method comprises:
adjusting a duty cycle of a switch transistor in a direct current conversion circuit of the power converter, to change output power of a photovoltaic module; and
when power of a load is less than a specified threshold, controlling the power converter to reduce the output power of the photovoltaic module from operating power to zero for at least once, wherein the operating power is greater than zero and less than rated output power of the photovoltaic module, and when the output power of the photovoltaic module is the operating power, the power converter operates in a maximum power point tracking MPPT mode.

11. The method according to claim 10, wherein the controlling the power converter to reduce the output power of the photovoltaic module from operating power to zero for at least once comprises:
controlling the power converter to reduce the output power of the photovoltaic module from the operating power to zero; and then controlling the power converter to operate in the MPPT mode again, to adjust the output power of the photovoltaic module to the operating power.

12. The method according to claim 10 or 11, wherein the controlling the power converter to reduce the output power of the photovoltaic module from operating power to zero for at least once comprises:
when a voltage of the bus capacitor is greater than an upper voltage threshold, reducing the output power of the photovoltaic module from the operating power to zero; and
when the output power of the photovoltaic module is zero and the voltage of the bus capacitor is not greater than a safe voltage threshold, controlling the power converter to operate in the MPPT mode again, to adjust the output power of the photovoltaic module to the operating power, wherein the upper voltage threshold is greater than the safe voltage threshold.

13. The method according to any one of claims 10 to 12, wherein the method comprises:
after the output power of the photovoltaic module is zero and remains for a specified time interval, controlling the power converter to operate in the MPPT mode again, to adjust the output power of the photovoltaic module to the operating power.

14. A power supply system, wherein the power supply system comprises a plurality of power converters according to any one of claims 1 to 9 and a power station controller, direct current inputs of the plurality of power converters are configured to connect to photovoltaic modules, and alternating current outputs of the plurality of power converters are configured to connect to loads, and the power station controller is configured to: receive output power data that is of the photovoltaic modules and that is reported by the plurality of power converters, and adjust power of the loads.
